(19) Europäisches Patentamt
European Patent Office
Office européen des brevets

(11) Veröffentlichungsnummer : **0 131 707 B2**

# (12) NEUE EUROPÄISCHE PATENTSCHRIFT

(45) Veröffentlichungstag der neuen Patentschrift : **24.06.92 Patentblatt 92/26**

(51) Int. Cl.$^5$ : **C08J 3/12,** C08L 23/08

(21) Anmeldenummer : **84105475.2**

(22) Anmeldetag : **14.05.84**

## (54) Nichtklebende Copolymerisate des Ethylens, deren Herstellung und Verwendung.

(30) Priorität : **20.05.83 DE 3318454**

(43) Veröffentlichungstag der Anmeldung : **23.01.85 Patentblatt 85/04**

(45) Bekanntmachung des Hinweises auf die Patenterteilung : **19.08.87 Patentblatt 87/34**

(45) Bekanntmachung des Hinweises auf die Entscheidung über den Einspruch : **24.06.92 Patentblatt 92/26**

(84) Benannte Vertragsstaaten : **BE CH DE FR GB IT LI NL**

(56) Entgegenhaltungen :
**EP-A- 0 014 467**
**FR-A- 1 323 379**
**FR-A- 2 158 837**
**FR-A- 2 430 436**
**GB-A- 1 243 603**
**JP-A- 4 847 934**
**US-A- 2 965 589**

(56) Entgegenhaltungen :
**US-A- 3 586 654**
**US-A- 3 779 785**
**US-A- 3 891 587**
**US-A- 3 892 834**
**US-A- 4 027 067**

(73) Patentinhaber : **BASF Aktiengesellschaft**
**Carl-Bosch-Strasse 38**
**W-6700 Ludwigshafen (DE)**

(72) Erfinder : **Brandstetter, Franz, Dr.**
**Ritterbueschel 45**
**W-6730 Neustadt (DE)**
Erfinder : **Reimann, Horst, Dr.**
**Adelheidstrasse 26**
**W-6520 Worms 1 (DE)**
Erfinder : **Ziegler, Walter, Dr.**
**Starenweg 15**
**W-6803 Edingen-Neckarhausen (DE)**
Erfinder : **Mietzner, Franz Georg, Dr.**
**Neuhausener Weg 3**
**W-6700 Ludwigshafen (DE)**
Erfinder : **Zahradnik, Franz, Dr.**
**Schwedlerstrasse 120**
**W-6700 Ludwigshafen (DE)**



Jouve, 18, rue Saint-Denis, 75001 PARIS

## Beschreibung

Die Erfindung betrifft nichtklebende thermoplastische Formmassen auf basis von Mischungen aus Carbonsäureester enthaltenden Ethylencopolymerisaten mit Schmelzindices kleiner als 200 g/10 min und 0,005 bis 2,0 Gew.%, bezogen auf das Copolymerisat, eines Trennmittels, das sowohl in Wasser als auch im Ethylencopolymerisat unlöslich ist, deren Herstellung und deren Verwendung.

Bei derartigen Formassen handelt es sich um ungeformte Stoffe aus thermoplastischen Kunststoffen, die durch spanloses Formen zu Formteilen oder Halbzeug oder Mischungen verarbeitet werden können und nicht aneinander haftende Formteile bzw. rieselfähige Pulver oder Granulate liefern.

Carbonsäureester enthaltende Copolymerisate des Ethylens, die $C_1$- bis $C_8$-Alkylester einer $C_3$- bis $C_4$-Alkencarbonsäure einpolymerisiert enthalten, sind beispielsweise aus den Literaturstellen GB-A-870 480, GB-A-900 969, US-A-2 953 551, DE-A-15 20 734 und DE-A-18 10 526 bekannt.

Aus der DE-A-32 38 391 sind Copolymerisate des Ethylens bekannt, die auf 100 Mol Ethylen 7 bis 22 Mol eines $C_1$- bis $C_8$-(Meth)-acrylsäurealkylesters und 0 bis 10 Mol eines weiteren mit Ethylen copolymerisierbaren Monomeren einpolymerisiert enthalten, wobei die Copolymerisate 0,3 bis 6 Gewichtsprozent eines Zusatzes enthalten, dessen Schmelzpunkt unterhalb von 250°C und dessen Siedepunkt oberhalb von 250 °C liegt und der eine Viskosität, bei der Einmischtemperatur, von unterhalb 1000 mPa · s hat. Auch hier führt die hohe Konzentration in einer Reihe von Anwendungsbereichen zu Schwierigkeiten.

Es ist auch bereits aus der US-A-40 27 067 bekannt, Silikonöle zu verwenden, um teilchenförmige Polymere, die zum Verkleben neigen, handhabbar zu machen, wobei 0,005 bis 1 Gew.% Trennmittel ausreichend sind und das Silikonöl eine Viskosität zwischen 100 und 10 000 $mm^2/s$ aufweisen kann.

In der Literatur (vgl. US-A-38 92 834, FR-A-24 30 436 oder US-A-37 79 785) sind auch bereits Trennmittel auf basis Ethylenoxid enthaltender Polymerisaten, Paraffine bzw. Wachse beschrieben.

Der Erfindung lag daher die Aufgabe zugrunde, Formmassen aus Copolymerisaten des Ethylens, die $C_1$- bis $C_8$-Alkylester von $C_3$- bis $C_4$- Alkencarbonsäuren mit einem möglichst hohen Anteil ster enthalten, zu schaffen, die sich durch Zugabe eines sowohl in Wasser als auch im Ethylencopolymerisat unlöslichen Trennmittels technisch leicht hand haben lassen.

Diese Aufgabe wird durch die in den Ansprüchen 1 und 2 beschriebenen Formmassen gelöst.

Eine weitere Aufgabe war die Auffindung eines Verfahrens zur Herstellung derartiger Formmassen.

Diese Aufgabe wurde durch die in den Ansprüchen 3 und 4 beschriebenen Verfahren gelöst.

Die Herstellung der Copolymerisate des Ethylens kann nach herkömmlichen üblichen Hochdruckpolymerisationsverfahren erfolgen [vgl. Ullmanns Enzyklopädie der Technischen Chemie, 4. Auflage, Band 19. (1980), Seiten 169 bis 175, Verlag Chemie GmbH, D-6940 Weinheim]. Die Copolymerisation des Ethylens mit den Alkencarbonsäurealkylestern, gegebenenfalls zusammen mit anderen mit Ethylen copolymerisierbaren Monomeren, erfolgt bei Drücken von 350 bis 5 000. vorzugsweise 1 500 bis 3 000 bar. Bei der Herstellung der erfindungsgemäßen Copolymerisate des Ethylens arbeitet man im besonderen bei Drücken von 2 000 bis 2 800 bar. Die Temperaturen im Polymerisationssystem liegen zwischen 50 und 450 °C, vorzugsweise zwischen 150 und 350 °C. Die Bedingungen im Polymerisationssystem lassen sich apparativ in sogenannten Rohrreaktoren oder Autoklaven einstellen. Unter Rohrreaktoren versteht man rohrförmige Polymerisationsgefäße, deren Längenausdehnung das über 2 000fache, bevorzugt 5 000 bis 50 000fache des Rohrdurchmessers beträgt. Wie üblich, wird ein Teil der Polymerisationswärme durch Kühlung des Rohrreaktors mit Wasser von außen abgeführt. Autoklaven sind Druckgefäße mit einem Längen-/Durchmesser-Verhältnis von 1 bis ca. 20. Besonders geeignet für die Herstellung der erfindungsgemäßen Copolymerisate des Ethylens sind Rohrreaktoren und hierbei vor allem Einzonen- bzw. Zweizonen-Rohrreaktoren.

Die Copolymerisation des Ethylens mit den Alkencarbonsäurealkylestern, gegebenenfalls mit anderen mit Ethylen copolymerisierbaren Monomeren, erfolgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 10 bis 200 Mol.-ppm, bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt : tert.-Butylhydroperoxid, tert.-Butylperbenzoat, Dilauroylperoxid und tert.-Butylperisononanat. Unter radikalischen Polymerisationsinitiatoren sollen auch Verbindungen wie beispielsweise Azo-isobuttersäuredinitril verstanden werden. Man kann auch Mischungen aus Sauerstoff und einem oder mehreren Peroxiden verwenden. Besonders geeignet sind Peroxide, wie di-tert.-Butylperoxid, tert.-Butylperpivalat und tert.-Butylperisononanat.

Das Molekulargewicht des anfallenden Copolymerisats kann durch die üblichen Regler, z. B. Kohlenwasserstoffe wie Propan, Propen etc., Ketone wie Aceton, Methylethylketon etc. oder Aldehyde wie Propionaldehyd, auf den gewünschten Wert gebracht werden. Besonders eignet sich hierbei Propionaldehyd.

Die Copolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Als Alkencarbonsäurealkylester kommen insbesondere die Ester der Acrylsäure oder Methacrylsäure mit $C_1$- bis $C_8$-Alkoholen in Frage. Ganz besonders zeichnet sich der Ester der Acrylsäure mit n-Butanol aus. Es können aber auch Mischungen aus verschiedenen Estern der Acryl- oder Methacrylsäure verwendet werden.

Die Copolymerisate des Ethylens enthalten 7 bis 22 Mol, vorzugsweise 8,5 bis 15 Mol Ester der Alkencarbonsäuren auf 100 Mol Ethylen einpolymerisiert.

Enthalten die Copolymerisate des Ethylens neben den Estern der Alkencarbonsäuren noch andere Comonomere, so sind einpolymerisiert auf 100 Mol Ethylen 7 bis 22 Mol, vorzugsweise 8,5 bis 15 Mol Ester der Alkencarbonsäuren und 0,1 bis 10 Mol, vorzugsweise 1,0 bis 3,3 Mol eines weiteren mit Ethylen copolymerisierbaren Monomeren.

Als weitere Comonomere kommen alle mit Ethylen copolymerisierbaren Monomere, insbesondere solche, die monoethylenisch ungesättigt sind, in Frage. Geeignet sind z. B. Ester monoethylenisch ungesättigter Dicarbonsäuren, insbesondere Mono- und Dialkylester der Maleinsäure und Fumarsäure; monoethylenisch ungesättigte Carbonsäuren, insbesondere Acryl-, Methacryl-, Malein- und Fumarsäure; Amide monoethylenisch ungesättigter Carbonsäuren, insbesondere Acryl- und Methacrylsäureamid sowie N-Mono- und N,N-Dialkylamide der Acryl- und Methacrylsäure, monoethylenisch ungesättigte Alkohole, monoethylenisch ungesättigte Ketone, Kohlenmonoxid oder epoxidgruppenhaltige Monomere und ungesättigte Carbonsäureanhydride. Vor allem geeignet sind (Meth)acrylsäure, Maleinsäureanhydrid oder Allylg lycidylether.

Die Copolymerisate des Ethylens haben Schmelzindices von kleiner als 200 g/10 min, vorzugsweise im Bereich von 6 bis 100 g/min, besonders aber im Bereich von 8 bis 20 g/10 min, gemessen nach ISO 1133 bei 190°C und 2,16 kg.

Die erfindungsgemäßen Formmassen enthalten 0,005 bis 2 Gew.%, bevorzugt 0.01 bis 0,5 Gew.%, bezogen auf das Ethylencopolymerisat, eines Trennmittels, das sowohl in Wasser als auch im Copolymerisat unlöslich und unterhalb von 60 °C flüssig ist.

Unter Trennmittel werden Verbindungen verstanden, die die Adhäsionskräfte zwischen zwei aneinandergrenzenden Oberflächen verringern. Als Trennmittel soll erfindungsgemäß ein spezielles Silikonöl oder ein spezielles Ethylen- und/oder Propylenoxid enthaltendes Polymerisat eingesetzt werden.

Unter Silikonölen sind Verbindungen wie Dimethylpolysiloxan oder Phenylmethylpolysiloxan zu verstehen. Die Viskositäten sollen unter 100 Pa·s (gemessen bei 25 °C) liegen. Bevorzugt sind insbesondere Produkte mit einer Viskosität bei 25 °C im Bereich von 0.65 bis 10 Pa·s. Besonders geeignet sind Dimethylpolysiloxane mit einer Viskosität bei 25 °C von 0,1 bis 7 Pa·s.

Bei den als Trennmitteln verwendeten Oligomeren bzw. Polymerisaten des Ethylenoxids handelt es sich unter anderem um Produkte mit der allgemeinen Strukturformel:

$$R\text{-}O(CH_2CH_2O)_xH$$

R = gesättigter Fettalkohol mit 7-31 Kohlenstoffatomen

x = 3, 5, 6, 7.

Bei den Copolymerisaten des Ethylenoxids mit Propylenoxid sind beispielsweise Produkte mit folgendem Aufbau als Zusätze geeignet:

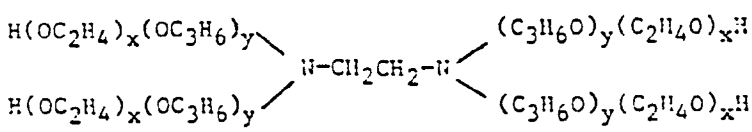

wobei x = 0,1 y = 0,9 und x + y = 1 ist.

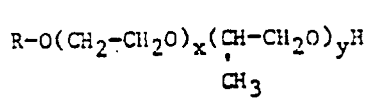

R = linearer Fettalkohol unterschiedlicher Kettenlänge, wobei $x \leqq 0{,}4$, $y \geqq 0{,}6$ und $x + y = 1$ ist.

Die Molekulargewichte der (Co)-Polymerisate des Ethylen- und/bzw. Propylenoxids sollen im Bereich von 600 bis 10 000, vorzugsweise im Bereich von 800 bis 6 000 liegen, die Viskositäten sollen bei 20 °C kleiner

als 5 000, bevorzugt 30 bis 2 500 mPa · s gemessen im Brookfield bei 60 Rpm sein.

Besonders geeignet sind Produkte mit der allgemeinen Strukturformel :

$$R{-}O(CH_2{-}CH_2O)_x(\underset{\displaystyle CH_3}{CH}{-}CH_2O)_yH$$

wobei R ein linearer Fettalkohol mit 7 bis 18 Kohlenstoffatomen, x im Bereich von 0,35 bis 0,2, y im Bereich von 0,65 bis 0,8, x + y = 1 ist.

Die Copolymerisate des Ethylens enthalten 0,005 bis 2 Gewichtsprozent, vorzugsweise 0,005 bis 0,2 Gew.% Trennmittel.

Entscheidend für die Eignung der Trennmittel ist, daß sie sowohl im Wasser als auch im Copolymerisat des Ethylens unlöslich und unterhalb von 60 °C, bevorzugt unterhalb von 30 °C, flüssig sind. Die Löslichkeit wird dabei an einem System aus 10 g Zusatz und 90 g Wasser bestimmt. Die Unlöslichkeit des Trennmittels im Carbonsäureester enthaltenden Copolymerisat des Ethylens wird dadurch geprüft, daß man aus einem Copolymerisat, das 1 Gew.% Trennmittel enthält, eine Folie herstellt und daran die Trübung verfolgt.

Die erfindungsgemäß beanspruchten Formmassen werden dadurch hergestellt, daß das aus dem Austragsaggregat (meist Extruder) austretende Ethylencopolymerisat mit einem Wasser (meist Kühlwasser), das das Trennmittel enthält, in Kontakt gebracht wird. Es ist aber auch möglich, schon erstarrtes Ethylencopolymerisat wieder aufzuschmelzen und dann den Kontakt des Trennmittels mit dem Ethylencopolymerisat im Wasserbad herbeizuführen. Besonders geeignet ist das Heißabschlagsystem. Prinzipiell ist das Verfahren aber bei allen Konfektionierarten anwendbar [vgl. Kunststoffhandbuch, band IV, Polyolefine, Carl Hanser Verlag, (1969), Seite 50].

Um ein schnelles Abkühlen zu gewährleisten, liegt die Temperatur des Wasserbades unterhalb 60 °C, bevorzugt im Bereich von 5 bis 30 °C.

Das Trennmittel wird in das Wasserbad über Dosieraggregate, vor allem über Pumpen zugegeben. Die Konzentration des Trennmittels im Wasserbad liegt vorteilhaft unter 10 Gew.%, bezogen auf das Wasser, vorzugsweise im Bereich von 0,1 bis 2 Gewichtsprozent.

Die erfindungsgemäßen Formmassen sind technisch gut handhabbar und eignen sich u. a. als Schmelzkleber, Haftvermittler, Antidröhnmassen, Dämpfungsmassen für mechanische Stöße, als Zusatz zu Thermoplasten, Bitumen, Kautschuken, Klebe- und Lacksystemen, insbesondere als rieselfähige Pulver und Granulate.

Die Erfindung wird an den nachfolgenden Beispielen erläutert.

Bei den Copolymerisaten handelt es sich um Produkte, die in röhrenförmigen bzw. Autoklaven-Reaktoren bei Drücken oberhalb von 1000 bar in Gegenwart von radialbildenden hitiatoren erhalten werden.

Als Trennmittel fanden Verwendung

I Dimethylpolysiloxan (Viskosität bei 25 °C 100 mPa·s)

II Dimethylpolysiloxan (Viskosität bei 25 °C 250 mPa·s)

III $C_{18}H_{37}{-}O{-}(CH_2{-}CH_2O)_4\,(\underset{\displaystyle CH_3}{CH}{-}CH_2O)_9\,H$

IV $C_{18}H_{37}{-}O(CH_2{-}CH_2O)_9\,(\underset{\displaystyle CH_3}{CH}{-}CH_2O)_5\,H$

(nicht erfindungsgemäß)

Die Zugabe der Trennmittel erfolgte folgendermaßen:

Die Ethylencopolymerisate werden nach Abtrennen des Monomeren über einen Einwellenextruder ausgetragen und mittels eines Heißabschlagsystems granuliert. Das Wasser im Abschlagraum enthielt die in der Tabelle angegebene Art und Menge an Trennmittel. Die Wassertemperatur lag bei 25 bis 30 °C. Nach dem Abtrennen des Wassers und Trocknen wurde versucht, das Granulat pneumatisch in einen Bunker zu fördern. Bei Zugabe der erfindungsgemäß beanspruchten Art und Menge an Trennmittel erfolgte das problemlos. Im anderen Fall klebten die Produkte zusammen.

Des weiteren wurde die Klebeneigung unter Belastung folgendermaßen geprüft:

In ein rundes Glasgefäß mit einem Durchmesser von 10 cm und einer Höhe von 10 cm wurden 200 g Granulat des Copolymerisats gegeben, mit einem Stempel von 500 g 24 Stunden bei 40 °C belastet. Nach dem Abkühlen wurde durch Kippen des Glasgefäßes geprüft, ob das Produkt noch rieselfähig war.

Der Gehalt an Silikonöl im Ethylencopolymerisat wurde durch Flammenatomabsorption bestimmt. Der Gehalt an Copolymerisaten des Ethylen-/Propylenoxids wurde nach Abwaschen des Produktes mit Methanol von der Ethylencopolymerisatoberfläche durch Jodwasserstoffspaltung bestimmt.

(Siehe Tabelle Seite 6)

## Tabelle

| Ethylencopolymerisate Comonomere | Mol/100 Mol Ethylen | Schmelzindex[1] [g/10 min] | Trennmittel Art | Konzentration [Gew.%] im Wasser | Konzentration [Gew.%] im Copolymerisat | wasserlöslich | mischbar mit Ethylencopolymerisat | Rieselfähigkeit promptlich | Rieselfähigkeit nach Lagerung |
|---|---|---|---|---|---|---|---|---|---|
| **Beispiele** | | | | | | | | | |
| 1 n-Butylacrylat | 9,4 | 8 | I | 0,5 | 0,01 | nein | nein | ja | ja |
| Acrylsäure | 1,6 | | | | | | | | |
| 2 n-Butylacrylat | 9,4 | 8 | II | 0,3 | 0,07 | nein | nein | ja | ja |
| Acrylsäure | 1,6 | | | | | | | | |
| 3 n-Butylacrylat | 9,4 | 8 | III | 1 | 0,5 | nein | nein | ja | ja |
| Acrylsäure | 1,6 | | | | | | | | |
| 4 n-Butylacrylat | 16 | 60 | II | 0,05 | 0,02 | nein | nein | ja | ja |
| Acrylsäure | 1 | | | | | | | | |
| 5 n-Butylacrylat | 13 | 72 | II | 0,3 | 0,08 | nein | nein | ja | ja |
| 6 Methylacrylat | 16 | 34 | II | 0,3 | 0,06 | nein | nein | ja | ja |
| **Vergleichsversuche** | | | | | | | | | |
| A n-Butylacrylat | 9,4 | 8 | - | - | - | - | - | nein | nein |
| Acrylsäure | 1,6 | | | | | | | | |
| B n-Butylacrylat | 9,4 | 8 | IV | 1 | 0,01 | ja | nein | nein | nein |
| Acrylsäure | 1,6 | | | | | | | | |

[1] gemessen bei 190 °C/2,16 kg nach ISO 1133

## Patentansprüche

1. Nichtklebende thermoplastische Formmassen auf Basis von Mischungen aus Carbonsäureester enthaltenden Ethylencopolymerisaten mit Schmelzindices kleiner als 200 g/10 min und 0,005 bis 2.0 Gew.-%, bezogen auf das Gopolymerisat, eines Trennmittels, das sowohl in Wasser als auch im Ethylencopolymerisat unlöslich ist, dadurch gekennzeichnet, daß die Ethylencopolymerisate auf 100 Mol Ethylen (a) 7 bis 22 Mol eines $C_1$- bis $C_8$-Alkylesters einer $C_3$- bis $C_4$-Alkencarbonsäure und (b) 0 bis 10 Mol zusätzlich eines oder mehrerer nicht unter (a) fallenden mit Ethylen copolymerisierbaren Gomonomeren einpolymerisiert enthalten und das Trennmittel ein Silikonöl mit einer Viskosität bei 25 °C kleiner als 100 Pa · s oder ein Ethylenoxid und/oder Propylenoxid enthaltendes Polymerisat mit einem Molekulargewicht von 600 bis 10 000 und einer Viskosität bei 20 °C kleiner als 5 000 mPa · s ist.

2. Formmassen nach Anspruch 1, dadurch gekennzeichnet, daß 1 bis 3,3 Mol Comonomer (b) im Ethylencopolymerisat einpolymerisiert sind.

3. Verfahren zur Herstellung der Formmassen nach Anspruch 1, dadurch gekennzeichnet, daß das aus einem Austragsaggregat austretende Ethylencopolymerisat mit Kühlwasser, das das Trennmittel enthält, in Kontakt gebracht wird.

4. Verfahren nach Anspruch 3, dadurch gekennzeichnet, daß die Temperatur des Kuhlwassers unter 60°C liegt und die Konzentration des Trennmittels im Wasserbad unter 10 Gew.-%, bezogen auf das Wasser liegt.

5. Verwendung der Formmassen nach Anspruch 1 zur Herstellung rieselfähiger Pulver und Granulate.

## Revendications

1. Matières à mouler thermoplastiques non collantes à base de mélanges de copolymères de l'éthylène et d'esters d'acides carboxyliques avec des indices de fusion inférieurs à 200 g/10 mn, ainsi que de 0,005 à 2,0 % du poids du copolymère d'un agent séparateur insoluble aussi bien dans l'eau que dans le copolymère éthylénique, caractérisées en ce que les copolymères éthyléniques contiennent, par 100 moles d'éthylène : (a) 7 à 22 moles d'un ester alkylique en $C_1$ à $C_8$ d'un acide alcène ($C_3$ ou $C_4$)-carboxylique; (b) 0 à 10 moles d'un ou de plusieurs comomomères supplémentaires autres que ceux cités sub (a) et copolymérisables avec l'éthylène, copolymérisées et l'agent séparateur est, soit une huile de silicone d'une viscosité inférieure à 100 Pa.s à 25°C, soit un polymère contenant de l'oxyde d'éthylène et(ou) de l'oxyde de propylène, d'un poids moléculaire compris entre 600 et 10 000 et d'une viscosité inférieure à 5 000 mPa.s à 20°C.

2. Matières à mouler suivant la revendication 1, caractérisées en ce que 1 à 3,3 moles de comonomère (b) sont copolymérisées dans le copolymère éthylénique.

3. Procédé de préparation de matières à mouler suivant la revendication 1, caractérisé en ce que le copolymère éthylénique, sortant d'une installation de décharge, est mis en contact avec de l'eau de refroidissement, qui contient l'agent séparateur.

4. Procédé suivant la revendication 3, caractérisé en ce que la température de l'eau de refroidissement est inférieure à 60°C et la concentration de l'agent séparateur dans le bain d'eau est inférieure à 10 % en poids par rapport à l'eau.

5. Utilisation de matières à mouler suivant la revendication 1 pour la préparation de poudres fluides et de produits granulés.

## Claims

1. A non-adhesive thermoplastic molding material based on a mixture of carboxylate-containing ethylene copolymer having a melt index of less than 200 g/10 min with from 0.005 to 2.0% by weight, based on the copolymer, of a release agent which is insoluble both in water and in the ethylene copolymer, wherein the ethylene copolymer contains, as copolymerized units, per 100 moles of ethylene, (a) from 7 to 22 moles of a $C_1$-$C_8$-alkyl ester of a $C_3$- or $C_4$-alkenecarboxylic acid and, in addition, (b) from 0 to 10 moles of one or more comonomers which are copolymerizable with ethylene and do not fall under (a), and the release agent is a silicone oil having a viscosity of less than 100 mPa.s at 25°C or is a polymer which contains ethylene oxide and/or propylene oxide and has a molecular weight of from 600 to 10,000 and a viscosity, at 20°C, of less than 5,000 mPa.s.

2. A molding material as claimed in claim 1, wherein the ethylene copolymer contains, as copolymerized

units, from 1 to 3.3 moles of comonomer (b).

3. A process for the preparation of a molding material as claimed in claim 1, wherein the ethylene copolymer emerging from a discharge unit is brought into contact with cooling water which contains the release agent.

4. A process according to claim 3, wherein the cooling water is at below 60°C and the concentration of the release agent in the water bath is below 10% by weight based on the water.

5. The use of a molding material as claimed in claim 1 for the production of free-flowing powders and granules.